(19) Europäisches Patentamt / European Patent Office / Office européen des brevets

(11) **EP 3 264 593 B1**

(12) **EUROPEAN PATENT SPECIFICATION**

(45) Date of publication and mention
of the grant of the patent:
**17.10.2018 Bulletin 2018/42**

(51) Int Cl.:
*H02P 29/50* (2016.01)   *H02P 21/00* (2016.01)
*H02P 9/10* (2006.01)   *H02P 21/06* (2016.01)

(21) Application number: **16177238.9**

(22) Date of filing: **30.06.2016**

(54) **CONTROL ARRANGEMENT FOR A GENERATOR**

STEUERUNGSANORDNUNG FÜR EINEN GENERATOR

AGENCEMENT DE COMMANDE POUR UN GÉNÉRATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.01.2018 Bulletin 2018/01**

(73) Proprietor: **Siemens Aktiengesellschaft
80333 München (DE)**

(72) Inventors:
• **Freire, Nuno Miguel Amaral
  7330 Brande (DK)**
• **Deng, Heng
  7430 Ikast (DK)**
• **Wu, Zhan-Yuan
  Sheffield S10 4BB (GB)**

(56) References cited:
**EP-A1- 2 552 012    EP-A1- 2 672 624
EP-A1- 2 869 458    EP-A2- 1 211 798
EP-A2- 2 043 255    US-A1- 2012 299 305**

**Description**

Field of invention

The present invention relates to a control arrangement for controlling stator currents and stator harmonic voltage of a stator of an electrical machine, further relates to a generator system comprising the control arrangement and still further relates to a wind turbine.

Art Background

In a wind turbine, a rotation shaft at which plural rotor blades are connected drives a generator in order to generate electric energy. Conventionally, a converter, in particular full scale frequency converter, is connected to output terminals of the generator. The frequency converter is widely used to interface the generator to a utility grid to which plural consumers of electricity are connected.

Due to a modulation limit and a limited DC-link voltage of the frequency converter, the generator voltage may be required to be regulated to a low enough level so that the generator current is still under control. For example, the maximum generator RMS voltage may be theoretically 777.8 V, if the DC-link voltage is 1100 V. Due to the pulse width modulation dead time and voltage drop at switching devices of the converter, the real achievable generator voltage may be only around 750 V.

The generator voltage may conventionally be controlled in a so-called dq-rotating frame which rotates with the electrical frequency of the generator. In the dq-rotating frame, the fundamental generator voltage ideally becomes a DC voltage. A simple closed-loop PID controller may be used to regulate the fundamental generator voltage. However, in reality, the generator voltage in the dq-frame may be a DC voltage plus a AC portion, in particular high frequency harmonics (typically at 6 times the electrical frequency of the generator), because of generator harmonic current and impedance harmonics.

With the simple PID controller for the generator voltage, the average value of the generator voltage may be controlled to a reference voltage. The peak value of the generator voltage may be higher than the modulation limit (750 V for example) due to the high frequency harmonics in generator voltage. This may cause transient over-modulation of converter and may lead to a loss of control of the generator current. There are many converter trip cases caused by this problem. To avoid the converter trips due to over-modulation, average generator voltage reference is conventionally set to a constant value lower than 750 V, for example 710 V. This may cause higher total generator/converter current and lower efficiency because of the higher field weakening current for lower generator voltage. For example, more current may be needed with a 710 V setting compared with that of a 750 V setting. Thus, there may be a need for a controller arrangement and for a generator system that can be operated at a higher efficiency.

As prior art, patent document EP-2.043.255-A2 describes an electrical generator control arrangement in wind turbine application for the used synchronous permanent magnet generator. A fundamental current control is performed in d/q-frame. Harmonics current control is performed (for each frequency) parallel to the fundamental control in separate d/g frames for positive and negative sequences (symmetric regulator). Controller input is derived from measured generator current, rotor speed and torque command.

Summary of the Invention

According to an embodiment of the present invention it is provided a control arrangement for controlling plural stator currents of plural stator windings of an electrical machine, in particular generator, wherein the plural windings are separately connectable to a converter, the control arrangement comprising: a fundamental current controller, including: a positive-sequence current controller configured for providing a first voltage command, in particular in a dq+ frame, based on the plural stator currents; and an optional negative-sequence current controller configured for providing a second voltage command, in particular in the dq- frame, based on the plural stator currents; the control arrangement further comprising: at least one harmonic voltage controller related to a harmonic order based on the electrical frequency of the electrical machine, wherein the harmonic voltage controller is configured to receive as inputs a winding voltage signal related to voltages at the plural stator windings, a reference winding voltage signal related to reference voltages at the plural stator windings and an electrical angle of the electrical machine, wherein the harmonic voltage controller is configured to output an reference harmonic current command, in particular a d-component of a reference harmonic current, based on the harmonic voltage controller inputs; and, optionally, at least one harmonic voltage calculation module configured to receive the reference harmonic current command and to output a harmonic voltage command based on the reference harmonic current command and feedback; a summation system for adding, in particular separately for a respective d-component and a respective q-component, the first voltage command, optionally the second voltage command, optionally a feedforward voltage signal and the harmonic voltage command to obtain a summed voltage command based on which the converter is controllable.

The electrical machine may be in particular a variable frequency AC electrical machine, such as an electromotor or a generator, in particular a generator of a wind turbine. The generator may for example be a synchronous generator, in particular having a rotor with permanent magnets rotating around a stator, in particular comprising two or more stator windings for different phases, such as three phases, and the plural stator currents flow through the plural stator windings. The generator may be an inner rotor generators or outer rotor generators.

The stator may form a full circumference or may be a segmented stator comprising several (physically separated) stator segments. The generator can have multiple electrical-isolated three-phase windings (power output) even though the stator is not a segmented stator.

The control arrangement may be a component in a sequence of modules which finally control the converter for the plural stator windings. The number of the plural converters may equal the number of the one or more sets of stator windings each stator windings providing for e.g. three different phases. The one or more sets of plural windings supply the electric power flow to the converter(s) during a normal operation of the generator, such as a wind turbine generator. The plural windings (in particular of each set of windings) may for example correspond to three phases or 6 phases.

The plural stator currents may for example be represented by three phase currents, such as $I_a$, $I_b$ and $I_c$. The currents contain both positive-sequence component and negative-sequence component, at certain frequencies. While the positive-sequence component may be interpreted as a vector rotating in an anti-clockwise manner, the negative-sequence may be interpreted as a vector rotating in a clockwise manner. According to this embodiment of the present invention the positive sequence component and negative-sequence component are separately controlled. In particular, with the negative-sequence component a degree of unbalance of the plural stator currents is obtained and the unbalance is reduced, when the converter is controlled based on the summed voltage command.

The control arrangement performs a method for controlling the plural stator currents of the electrical AC machine. The control arrangement and the method performed by the control arrangement may be preferably used in variable speed wind turbines. However, it may be possible to use the method and the current control for other applications like motor drives and electrical cars.

The dq-frame is a particular frame or coordinate system to represent in particular three phase circuits or currents. Thereby, the three AC quantities, such as three phase currents are transformed to two (or three, if a dq0 frame is considered) quantities, which may be pure DC quantities if the three phase currents are balanced. In order to obtain the quantities in the dq-frame a 3x3 (or 2x3) transformation matrix is applied to the three phase currents. Thereby, the d-axis is perpendicular to the q-axis and the dq-frame rotates with the frequency of the three phase currents according to the first order in an anti-clockwise manner. Thus, the first voltage command may comprise two (or three) components in the dq-frame and also the second voltage command may comprise two components (or three) in the dq-frame. By the transformation, the three phase current $I_a$, $I_b$, $I_c$ are transformed into the quantities $I_d$, $I_q$.

The fundamental current controller may be configured and adapted as described in the European patent EP 2 672 624.

The harmonics of the electrical machine, in particular a generator, voltage in a dq frame may be changed by adjusting the harmonic Id and Iq (d-component and q-component of the generator current flowing in the plural stator windings) at the corresponding frequency. For example, in general, the 6f (six times the electrical frequency of the generator or electrical machine) generator harmonic voltage may be changed by adjusting the 6f Iq and 6f Id harmonic currents. Adjusting the harmonic Iq current may change the generator torque ripple which may cause noise and vibration issue of the generator. In contrast, adjusting the harmonic Id current may have a relatively small impact on the generator torque ripple. Therefore, according to embodiments of the present invention, preferably the harmonic Id current is regulated, to reduce harmonics of the generator voltage. In particular, the summed voltage which is output by the control arrangement may be configured, to regulate exclusively or substantially exclusively the Id current in the plural stator windings, while the Iq current is substantially not affected.

In particular the control arrangement is adapted to control the electrical machine so that its currents may be controlled such as to control voltage corresponding to higher harmonics of an electrical frequency of the generator. Thereby, the efficiency of the generator or electrical machine may be improved.

The fundamental current controller is provided to control the magnitude, phase and frequency of the electrical quantities varying with the (basic) electrical frequency (i.e. 1f) of the generator. The fundamental current controller is designed substantially not to influence higher harmonics of the currents and voltages in or at the plural stator windings.

For damping at least one harmonic voltage of the electrical frequency of the generator (such as harmonic n or harmonic m corresponding to n times and m times, respectively, the electrical frequency of the electrical machine), the harmonic voltage controller and the (optional) associated harmonic voltage calculation module are provided. For each harmonic voltage to be damped, the control arrangement may comprise a particular harmonic voltage controller and, optionally, an associated particular harmonic voltage calculation module connected in series.

The summed voltage command may be supplied to a converter which is connected to output terminals of a generator. The summed voltage command may be a control signal to the converter, in order to control plural power transistors, such as IGBTs. The converter may comprise a generator side converter portion, a DC-link connected to the generator converter portion and a grid side converter portion connected to the DC-link. Each converter portion may comprise in particular six power transistors when the generator has three output phases. The plural power transistors may be controlled by gate driver signals supplied to gates of the respective power transistors. When controlling the converter based on the summed voltage command, the power transistors may be made conductive and non-conductive such as to result in voltages at the plural stator windings corresponding to the summed voltage command. As an effect, a harmonic Id current is injected to the generator. In the ideal case, embodiments of the present invention may substantially remove or at least reduce the generator harmonic voltage, i.e. the generator voltage oscillated with a particular multiple of the electrical frequency of the generator. In particular, a number of different harmonics may be reduced or even removed.

The peak voltage may be very close to the average voltage so that the flux weakening voltage reference may be set very close to the hardware limit. There may be no waste of current on field weakening according to embodiments of the present invention. Therefore, more generator torque may be produced with the same generator and converter hardware. Further, efficiency of the generator and converter may be improved.

The dq+ frame may be a frame which rotates in the same sense and with the frequency of the electrical frequency of the electrical machine, in particular generator. The dq- frame may be a coordinate frame rotating in a reverse sense or reversed to the electrical frequency of the generator but having the same frequency. Embodiments of the present invention may also transform particular quantities in a frame rotating with a multiple of the electrical frequency of the generator, the multiple for example being the harmonic to be damped or reduced.

The harmonic voltage controller and/or the harmonic voltage calculation module may comprise hardware and/or software modules and in particular also software code. The winding voltage signal may for example relate to voltages (or represent voltages) or a combined value of voltages, the voltages being defined in the dq rotating frame. The winding voltage signal may be derived based on plural measured voltage quantities. The winding voltage signal may for example be determined by measuring three voltages at three stator windings, transforming the three voltage values into a dq rotating frame and taking the square root of the sum of the square components of the voltage in the d and the q component. Other definitions of the winding voltage signal may be possible. The reference winding voltage signal may represent a desired or demanded winding voltage or desired winding voltages at the plural stator windings.

The electrical frequency of the electrical machine may be calculated as a product of the number of poles and the rotational speed of a rotation shaft rotating in the generator (which rotation shaft may have attached to it in particular permanent magnets being inductively coupled to the plural stator windings).

The reference harmonic current command may in particular represent a d-component of a reference harmonic current, which when injected into the generator, may cause reduction of the stator voltage oscillation oscillating with the particular harmonic, such as harmonic n, harmonic m or the like. The harmonic voltage calculation module transforms the reference harmonic current command into the reference harmonic voltage command, which is then summed with the first voltage command, the second voltage command and a feedforward signal, in order to obtain the summed voltage command. The feedforward voltage signal may be independent of any measured voltage or current at the electrical machine, in particular generator but may depend on the electrical frequency of the electrical machine and reference values regarding current of the generator or electrical machine.

According to an embodiment of the present invention, the harmonic controller comprises a filter arranged to receive the winding voltage signal and the electrical angle of the electrical machine and configured to output a filtered winding voltage signal in which harmonics other than the harmonic of interest in the winding voltage signal are reduced, and a harmonic voltage regulator arranged to output the reference harmonic current command based on the filtered winding voltage signal and the reference winding voltage signal.

The harmonic voltage controller may be provided for any harmonic to be damped and may be in particular configured depending on the harmonic to be damped. The filter may filter out other harmonics which are not of interest or which are not desired to be damped. The filter may comprise an analog and/or digital filter.

The harmonic voltage regulator may be constructed or configured in a number of different manners. However, the harmonic voltage regulator is in general adapted, to derive the reference harmonic voltage command, which when supplied to the converter, causes effectively injection of the reference harmonic current into the generator.

According to an embodiment of the present invention, the harmonic voltage regulator comprises a difference element arranged for calculating a difference between the filtered winding voltage signal and the reference winding voltage signal, and a regulator system configured to output the reference harmonic current command based on the difference such that when a corresponding reference harmonic current is injected into the stator winding, damping of the harmonic is caused.

The regulator system may be differently arranged as described below.

According to one embodiment of the present invention, the regulator system comprises a phase shifter configured to output a 90 degree shifted difference, a transformation module configured to transform the difference and the shifted difference into a rotating frame corresponding to the harmonics, a first PI-regulator configured to receive the first transformed (previously shifted) difference and to output a first regulator signal, a second PI-regulator configured to receive the second transformed difference and to output a second regulator signal, another transformation module configured to back-transform the first regulator signal and the second regulator signal into a rotating frame corresponding to the electrical frequency of the electrical machine, in order to obtain the reference harmonic current command.

The transformation module is configured to transform the difference and the shifted difference in a coupled manner, (where the Park transformation is applied with use of the angle rotating at harmonic frequency) into a rotating frame corresponding to the harmonic under consideration. The PI-regulators may generate an output based on the transformed difference, such that the difference ideally becomes zero when the summed voltage command is actually supplied to the converter controlling the electrical machine.

The other transformation module is configured to back-transform the first regulator signal and the second regulator signal in a coupled manner, (where the reverse Park transformation is applied with use of the angle rotating at harmonic frequency) into a rotating frame corresponding to the electrical frequency of the electrical machine, in order to obtain the reference harmonic current command (in particular a d-component of the current) For each harmonic frequency, it can take positive or negative values, hence a transformation in the positive reference frame or negative reference frame is required, whilst for each reference frame the rotating signal shall be represented by a d- and a q-components.

According to an embodiment of the present invention, the regulator system comprises a first trigonometric multiplicator configured to output a first multiplied difference, being the difference multiplied by a first trigonometric multiplier depending on the harmonics; a first regulator configured to output a first regulator signal based on the first multiplied difference; a second trigonometric multiplicator configured to output a multiplied first regulator signal, being the first regulator signal multiplied by a second trigonometric multiplier depending on the harmonics; a third trigonometric multiplicator configured to output a third multiplied difference, being the difference multiplied by a third trigonometric multiplier depending on the harmonics; a second regulator configured to output a second regulator signal based on the third multiplied difference; a fourth trigonometric multiplicator configured to output a multiplied second regulator signal, being the second regulator signal multiplied by a fourth trigonometric multiplier depending on the harmonics; and a summation element configured to sum the multiplied first regulator signal and the multiplied second regulator signal and to output the sum as the reference harmonic current command.

The trigonometric multiplier may be a function of a sine or a cosine function having arguments as a multiple of the electrical frequency of the electrical machine, the multiple being the number indicating the harmonics to be damped. By performing multiplications before the respective regulator and after the respective regulator, a transformation in a frame rotating with the multiple of the electrical frequency of the generator and a backtransformation may be achieved. The trigonometric multiplicators may also be implemented in software. Also the regulators may be implemented in software.

According to an embodiment of the present invention, the regulator system comprises a resonant regulator configured to output the reference harmonic current command based on the difference, the resonant regulator being configured to regulate the harmonic.

According to an embodiment of the present invention, the harmonic current calculation module is configured to receive a q-component of the reference harmonic current being determined, in particular using a torque ripple controller, such as to reduce torque ripple in the electrical machine.

Thereby, simultaneously, a torque ripple in the electrical machine may be reduced as well as one or more undesired voltage harmonics may be reduced.

According to an embodiment of the present invention, the positive-sequence current controller comprises a frame transformation module for transforming the plural stator currents, into current signals in a dq+ frame based on an electrical angle of the electrical machine, wherein the negative-sequence current controller comprises a frame transformation module for transforming the plural stator currents, into current signals in a dq- frame based on a negative of an electrical angle of the electrical machine.

The plural stator currents may be represented e.g. by three-phase currents which comprise both a positive sequence component and a negative-sequence component. Both components are converted to a rotating frame (dq+) which rotates with electrical speed of the generator. The three-phase currents (both positive-sequence component and negative-sequence component) are converted to Id+ and Iq+ in the dq+ rotating frame. Thereby, the positive sequence component becomes a dc component in dq+ frame, while the negative sequence becomes a $2^{nd}$ order harmonic in dq+ frame.

The dq+ current signal may comprise at least two components, i.e. a positive sequence component and a negative sequence component, in the dq+ frame. The positive sequence component may be a pure DC signal in this frame and may indicate a magnitude of the plural stator currents, if the three phase current are balanced and without distortion(i.e. the plural stator currents, have the same peak value and have a relative phase difference of 120°). If three phase currents are unbalanced, then the negative current component may become $2^{nd}$ order harmonic in dq+ frame. The amplitude of the $2^{nd}$ order harmonic may be indicative for current unbalance. Thereby, the deviations may be detected and then modified.

According to an embodiment of the present invention, the positive-sequence current controller comprises a filter, in particular adaptive filter having as an input the electrical frequency of the generator, for generating a filtered dq+ current signal, in which AC-components, in particular AC-components corresponding to harmonics a multiple of electrical frequency, are reduced in amplitude, and/or wherein the negative-sequence current controller comprises another filter, in particular adaptive filter having as an input the electrical frequency of the generator, for generating a filtered dq- current signal, in which AC-components, in particular AC-components corresponding to multiple of electrical frequency, are reduced in amplitude, wherein, in particular, a filter characteristics of the filter of the negative-sequence current controller and/or the other filter of the positive-sequence current controller is adaptable according to the electrical frequency of the generator.

The filter may be an electronic filter or software implemented filter. The filter may have a transmission characteristics which may be adapted according to the frequency of the plural stator currents. The filter of the positive-sequence current controller may for example filter out or damp AC-components having a frequency of two times, three times, four times, five times, six times or more times the electrical frequency of the generator. Thereby, subsequent process of the dq+ current signal may be simplified and regulation may be enabled.

According to an embodiment of the present invention the negative-sequence current controller comprises a filter, in particular adaptive filter having as an input the electrical frequency of the generator, for generating a filtered dq-current signal, in which AC-components, in particular AC-components corresponding to harmonics of multiple generator electrical frequency, are reduced in amplitude.

According to an embodiment of the present invention, the positive-sequence current controller comprises a regulator, in particular PI-controller, for generating a dq+ voltage signal based on the filtered dq+ current signal and a positive-sequence current reference signal received as further input, and/or wherein the negative-sequence current controller comprises a regulator, in particular PI-controller, for generating a dq- voltage signal based on the filtered dq-current signal and a negative-sequence current reference signal received as further input.

According to an embodiment of the present invention, the fundamental current controller further comprises a voltage feedforward module for generating the feedforward voltage signal based on the positive-sequence current reference signal and the negative-sequence current reference signal and based on electrical frequency of the electrical machine.

The voltage feedforward module may improve the dynamic performance of the controller and decouple components in the d-axis and the q-axis.

According to an embodiment of the present invention, the negative-sequence current controller comprises a reverse frame transformation module for generating the second voltage command as a reverse transformed, in particular according to the negative-sequence of two times the electrical angle, signal output by the regulator of the negative-sequence current controller.

According to an embodiment of the present invention it is provided a converter controller for controlling a converter of an energy production system, the converter controller comprising: a control arrangement according to one of the preceding embodiments; a transformation module for transforming the summed voltage command from rotating dq+ frame to a stationary three phase frame or two phase frame command; a modulator to modulate the three phase frame command according to a DC-voltage at a DC-link of the converter.

According to an embodiment of the present invention it is provided a generator system comprising: a generator having a rotor and at least one set of plural stator windings; at least one converter, wherein the plural stator windings of each of the at least one set of stator windings are connected to a corresponding converter of the at least one converter; a converter controller according to the preceding claim for each converter, connected to the corresponding converter, wherein the generator is in particular a variable frequency generator, wherein the converter is in particular a AC-DC-AC converter.

The generator system may in particular be comprised in a wind turbine. In particular, the generator may have at least two plural stator windings or two or more sets of stator windings, each set in particular belonging to a particular stator segment or the two or more sets belonging to a single stator forming the full circumference. Further, the generator system may comprise at least two converters, wherein the plural stator windings of each set of stator windings are connectable to a corresponding converter of the at least two converters. Further, the generator system may comprise at least two control arrangements according to an embodiment as described above, wherein each control arrangement is connectable to a corresponding converter of the at least two converters. Thereby in particular, if one set of stator windings or its converter fails, it may be ensured that the remaining stator windings of the remaining set or sets have balanced stator currents. Thereby, the operation of the generator system may be improved, in particular regarding efficiency and noise reduction.

Further, a wind turbine is provided, comprising a rotor shaft having plural rotor blades connected thereon and a generator system according to the preceding embodiment, where the rotor of the generator system is mechanically coupled with the rotor shaft.

Embodiments of the present invention are now described with reference to the accompanying drawings. The invention is not restricted or limited to the illustrated or described embodiments.

Brief Description of the Drawings

Fig. 1 schematically illustrates a wind turbine according to an embodiment of the present invention including a converter controller according to an embodiment of the present invention;

Fig. 2 schematically illustrates a generator system according to an embodiment of the present invention which may for example be comprised in the wind turbine illustrated in Fig. 1;

Fig. 3 illustrates a schematic diagram of a control arrangement according to an embodiment of the present invention which may for example be comprised in the generator system or a converter controller according to an embodiment of the present invention;

Fig. 4 schematically illustrates a harmonic voltage controller which may be comprised in the control arrangement illustrated in Fig. 3;

Fig. 5 schematically illustrates an example of a harmonic voltage regulator which may be comprised in the harmonic voltage controller illustrated in Fig. 4;

Fig. 6 schematically illustrates another example of a harmonic voltage regulator which may be comprised in the harmonic voltage controller illustrated in Fig. 4;

Fig. 7 schematically illustrates a further example of a harmonic voltage regulator which may be comprised in the harmonic voltage controller illustrated in Fig. 4;

Fig. 8 illustrates graphs of a voltage as observed in a conventional wind turbine; and

Fig. 9 illustrates a graph showing the dependency of a current and a maximum converter voltage.

Detailed Description of embodiments

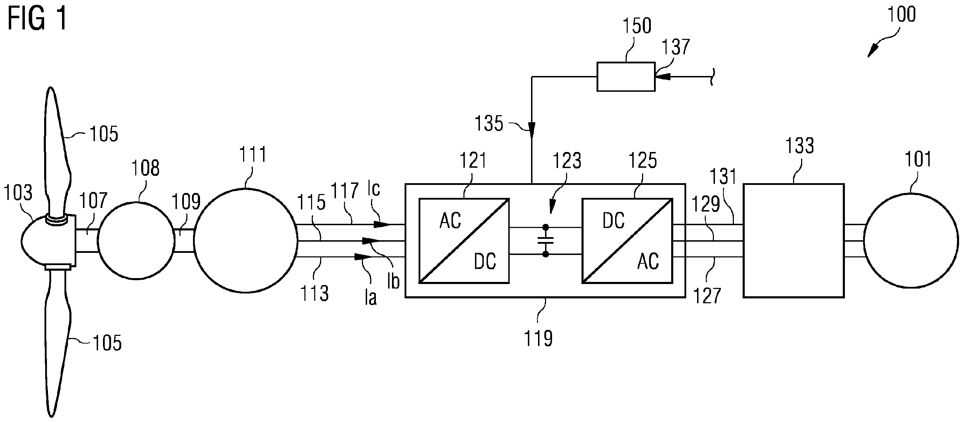

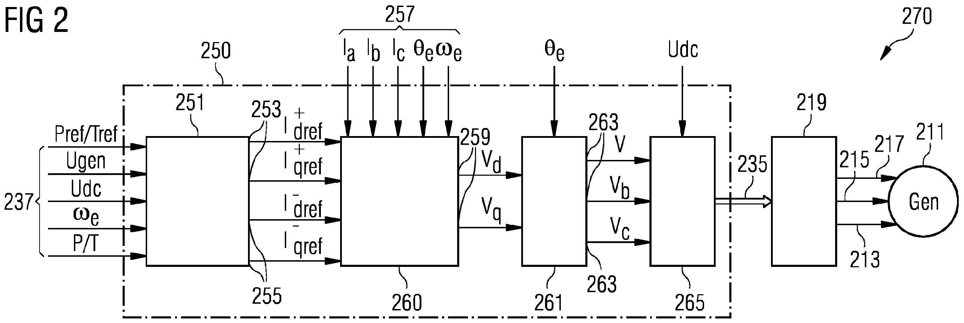

**Fig. 1** illustrates in a schematic form a wind turbine 100 which provides electric energy to a utility grid 101. The wind turbine comprises a hub 103 to which plural rotor blades 105 are connected. The hub is mechanically connected to a main shaft 107 whose rotation is transformed by a gear box 108 to a rotation of a secondary shaft 109, wherein the gear box 108 may be optional. The main shaft 107 or the secondary shaft 109 drives a generator 111 which may be in particular a synchronous permanent magnet generator providing a power stream in the three phases or windings 113, 115 and 117 to a converter 119 which comprises a AC-DC portion 121, a DC-link 123 and a DC-AC portion 125 for transforming a variable AC power stream to a fixed frequency AC power stream which is provided in three phases or windings 127, 129, 131 to a wind turbine transformer 133 which transforms the output voltage to a higher voltage for transmission to the utility grid 101.
The converter 119 is controlled via a converter command 135 which is derived and supplied from a converter controller 150 according to an embodiment of the present invention, which receives at least one input signal 137, such as one or more reference values or one or more quantities indicative of the operation of the generator 111 or any component of the wind turbine 100.
The generator in Fig. 1 comprises a single three-phase stator winding. Thereby, the winding 113 carries the stator current $I_a$, the winding 115 carries the stator current $I_b$ and the winding 117 carries the stator current $I_c$.
The converter controller 150 controls the converter 119 such that generator voltage and power follow commands and the stator current $I_a$, $I_b$ and $I_c$ are balanced. The converter controller 150 illustrated in Fig. 1 is in particular adapted to counteract high frequency voltage harmonics (for example a harmonic corresponding to six times the electrical frequency of the generator 111).
The generator 111, the converter 119 and the converter controller 150 together form a generator system according to an embodiment of the present invention. An example of a generator system 270 is illustrated in Fig. 2. The generator system 270 comprises a generator 211, a converter 219 and a converter controller 250, wherein the converter controller 250 controls the converter 219 by providing control signals 235 to the converter 219. The generator 211 has a rotor and at least one set of plural stator windings which are connected to the three converter inputs 217, 215, 213.

The converter controller 250 comprises a current reference calculation module 251 which receives inputs 237, as indicated in Fig. 2. The inputs 237 include reference power and/or reference torque $P_{ref}/T_{ref}$, generator voltage $U_{gen}$, DC-link voltage $U_{dc}$, electrical frequency of the generator $\omega_e$ and actual power and/or actual torque P/T. The current reference calculation module 251 outputs, based on the inputs 237, at output terminals 253, reference values of a positive sequence $I+d_{ref}$, $I+q_{ref}$ and negative sequence reference currents $I-d_{ref}$, $I-q_{ref}$ and provides these reference currents in the rotating dq frame to a control arrangement 260 according to an embodiment of the present invention. The control arrangement 260 receives further inputs 257 including the three-phase current $I_a$, $I_b$, $I_e$, the electrical position $\Theta_e$ of the generator and the electrical frequency $\omega_e$ of the generator. Based on the current references and the inputs 257, the control arrangement 260 outputs a summed voltage command 259, in particular voltage signal $V_d$, $V_q$ in the dq rotating frame and provides these outputs to a dq/abc transformation module 261 which receives as a further input the electrical position of the generator $\Theta_e$. The transformation module 261 outputs the voltages of the three phases $V_a$, $V_b$, $V_c$ and provides these to a modulator 265 which further receives the DC-link voltage $U_{dc}$. The modulator 265 outputs the control signal 235 which is supplied to the converter 219.

In particular, the converter controller 250 illustrated in Fig. 2 controls the generator-side of the frequency converter 219. Thereby, the Id and Iq reference calculation block 251 is used to calculate fundamental current reference in a synchronous rotating d-q frame. The input to the reference calculation block 251 could be power/torque reference, generator voltage, DC-link voltage, generator speed and power/torque. It may also be possible to use some combinations of these signals 237 as inputs. The Iq current reference could be calculated based on power/torque reference, DC-link voltage regulation requirements etc. depending on the application requirements.

The control arrangement 260 illustrated in Fig. 2 may be considered to be a closed-loop feedback regulation of a generator current in a d-q frame. For a better dynamic performance and decoupling, voltage feedforward may also be used in this block.

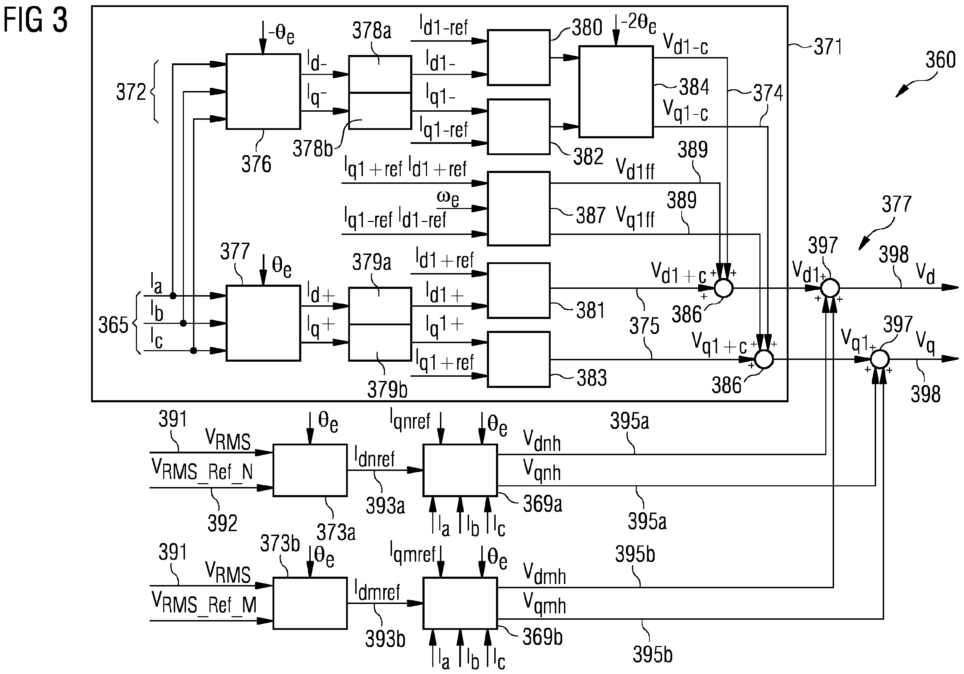

Fig. 3 schematically illustrates an example of a control arrangement 360 which may for example be comprised in the generator system 270 replacing for example the control arrangement 260. The control arrangement 360 comprises a fundamental current controller 371, at least one harmonic voltage controller 373, in particular an Nth harmonic voltage controller 373a and an Mth harmonic voltage controller 373b. The control arrangement 360 further comprises at least one harmonic current calculation module, in particular a Nth harmonic current controller 369a and a Mth harmonic current controller 369b. The control arrangement 360 further comprises a summation system 377 for adding outputs of the fundamental current controller 371 and the harmonic current controller 369a and 369b.

The fundamental current controller 371 thereby includes a negative-sequence current controller 372 which is configured for providing a second voltage command Vd1-c, Vq1-c (also referred to as 374), based on the plural stator current $I_a$, $I_b$, $I_c$. Thereby, the stator currents $I_a$, $I_b$, $I_c$ are provided to a frame transformation module 376 which further receives the negative of the electrical position $\Theta_e$ of the generator and outputs the current in the negative-sequence frame, namely Id-, Iq- and provides it to a (double) filter 378a, b. The output of the filter 378, which is in particular implemented as two separate filter elements 378a, 378b, comprises the (If harmonic of) negative sequence d-component of the current, i.e. Id1-, and the negative-sequence q-component of the current, namely Iq1- ('1' stands for the If harmonic, i.e. the fundamental generator electrical frequency). The current components are provided separately to two regulators, namely an Id1-regulator 380 and a Iq1-regulator 382 which further receive reference values of the corresponding current components. The regulators 380, 382 output signals to a reverse frame transformation module 384 which further receives the negative of two times the electrical position (i.e. $-2\Theta_e$) of the generator. The reverse frame transformation module 384 outputs the second voltage command 374 here represented and denoted as Vd1-c, Vq1-c which are supplied to summation elements 386.

The fundamental current controller 371 further comprises the positive-sequence current controller 365 which is implemented similar to the negative-sequence current controller 372 but which comprises the frame transformation module 377 which transforms the three stator currents $I_a$, $I_b$, $I_c$ into the positive-sequence current components Id+, Iq+ which are provided to the filter 379a, b which diminishes or damps higher harmonics and outputs the positive-sequence current components Id1+, Iq1+ which are separately supplied to the regulators 381, 383 which further receive reference values of the corresponding current components. The regulators output a first voltage command 375, i.e. Vd1+c, Vq1+c which are also provided to the summation elements 386.

The fundamental current controller 371 further comprises a voltage feedforward module 387 which receives reference values of the currents in the positive-sequence frame and also the negative-sequence frame, namely Iq1+ref, Id1+ref, Iq1-ref, Id1-ref. Further, the feedforward module 387 receives the electrical frequency of the generator $\omega_e$. The voltage feedforward module 387 outputs the voltage feedforward command 389, namely Vd1ff, Vq1ff, which is also provided to the summation elements 386.

The control arrangement 360 may comprise at least one harmonic voltage controller 373 which is connected to a corresponding harmonic current controller 369, wherein each of the harmonic voltage controllers may be provided for damping a particular harmonic of the electrical frequency of the generator.

As an example, the control arrangement 360 illustrated in Fig. 3 comprises two harmonic voltage controllers 373a and 373b which are related to a corresponding harmonics N, M of an electrical frequency of the electrical machine, in particular the generator 111 or 211 illustrated in Figs. 1 and 2, respectively. Thereby, each harmonic voltage controller receives as input a (e.g. measured) winding voltage signal 391 in this case $V_{RMS}$, and further a reference value 392 of the winding voltage. The harmonic voltage controller 373 further receives the electrical angle or electrical position $\Theta_e$ of the generator and outputs based on these inputs, a reference harmonic current command 393, i.e. in the particular example Idnref which is provided to the harmonic current controller 369.

The harmonic current controller 369a, 369b receive as inputs a d-component of the reference harmonic current, i.e. Idnref corresponding to this harmonic n (n being equal to N). The harmonic current controller further receives the electrical position $\Theta_e$ of the generator and the three stator currents $I_a$, $I_b$, $I_c$. The harmonic current controller 369 outputs the corresponding reference harmonic voltage command 395, i.e. 395a and 395b, respectively for the different harmonic current controller 369a, 369b. The reference harmonic voltage command is denoted as Vdnh, Vqnh for the nth harmonic.

The reference harmonic voltage commands 395a, 395b are provided, in particular separately for each component in the dq-frame, to summation elements 397 to which also the output of the fundamental current controller 371 is provided. The summed first voltage command 395, the second voltage command 374 and the feedforward voltage command 389 added to the harmonic voltage commands 395a, 395b are denoted as summed voltage commands 398, i.e. Vd, Vq. This summed voltage command 398 may then be provided as a control signal to a converter, such as converter 119 or converter 219 illustrated in Figs. 1 and 2, respectively.

The control arrangement 360 illustrated in Fig. 3 comprises the fundamental current controller 371 for using fundamental positive-sequence and/or negative-sequence current references, current feedback signals and generator electrical frequency in combination with fundamental positive- and negative-sequence regulators (Id1+ regulator, Iq1+ regulator, Id1- regulator, Iq1- regulator) and voltage feedforward providing fundamental voltage commands (Vd1, Vq1). Thereby, the "1" relates to the first harmonic, i.e. the electrical frequency of the generator. The control arrangement 360 further comprises at least one generator harmonic voltage controller 373 for the harmonic voltage configured for using the harmonic voltage command VRMS_ref_N (the command may be zero in most of the cases), measured/reference/voltage feedback signal $V_{RMS}$ and electrical angle of the generator in combination with regulators for controlling harmonic voltages to follow commands in order to obtain harmonic current commands (Idnref). In some embodiments, the voltage feedback signal (also referred to as winding voltage signal) may be calculated according to the following equation:

$$V_{RMS} = \sqrt{V_d^2 + V_q^2}$$

Vd, Vq being the d-component and q-component, respectively, of the stator winding voltage.

It is also possible to use modulation index (MD=Vrms/Vdc.) of generator-side converter as feedback source (in particular winding voltage signal) In that case, the command shall also be a modulation index. The summed voltage command output by the control arrangement can represent a modulation index to be achieved at the converter. The control arrangement 360 further comprises at least one unit 369 for calculating harmonic voltage commands (Vdnh, Vqnh) based on harmonic current commands. This unit can be a closed-loop regulation of harmonic current or open-loop calculation of harmonic voltage.

A similar or same configuration may be used for regulating mth harmonic voltage. If more harmonics need to be controlled, more modules, i.e. further harmonic voltage controllers 373 and corresponding further harmonic current controllers 369, may be provided. The outputs from different harmonic current controllers shall be added together.

Therefore, the control arrangement 360 comprises summation elements 386, 397 for adding voltage commands to achieve the summed command, i.e. the converter control signals 398.

The positive-sequence fundamental current controller in the synchronous d-q frame $+\omega_e$ may be well-known. To regulate negative-sequence fundamental current, the three-phase current may be converted to a rotating frame with $-\omega_e$ speed by a park transformation. The fundamental negative-sequence current may then be converted from AC to DC after the transformation. A PI controller may be used to regulate the negative currents following their references in this rotating frame. For achieving a better dynamic performance and decoupling, a voltage feedforward may also be used in this rotating frame. The outputs of the voltage feedforward and positive- and negative-sequence current regulators are added together giving fundamental voltage commands at the output of the fundamental current controller 371.

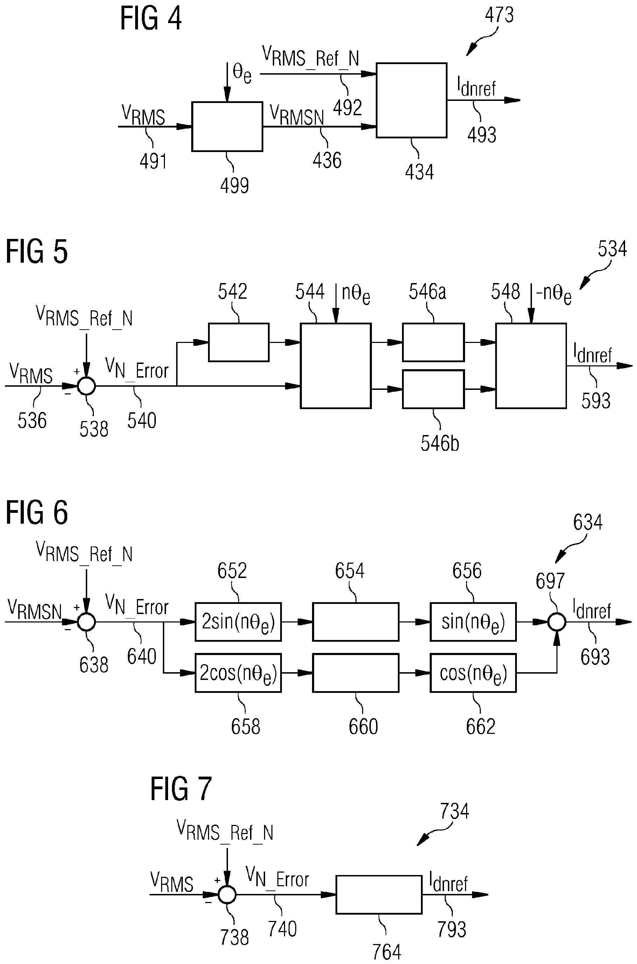

Fig. 4 illustrates an embodiment of a harmonic voltage controller 473 which comprises a filter 499 which is arranged to receive the winding voltage signal 491 and the electrical angle $\Theta_e$ of the generator and which is configured to output a filtered winding signal 492 denoted as $V_{RMSN}$ (in which harmonics other than N are reduced) which is provided to a harmonic voltage regulator 434. Thereby, the harmonic voltage regulator also receives the reference winding voltage signal 492 (which may e.g. indicate that the Nth harmonic voltage should be zero). The harmonic voltage regulator 434 outputs the reference harmonic current commands 393 also denoted as Idnref.

In Fig. 4, details are shown of harmonic voltage controllers according to embodiments of the present invention. The harmonic voltage is controlled by the harmonic current in Id (Idnref), while the harmonic current command in Iq (Iqnref) may be provided by other control features, such as a torque ripple controller that minimizes generator torque ripple. The estimated/measured generator voltage in the dq frame passes an adaptive filter so that the Nth harmonics in the generator voltage is higher than harmonics at other frequencies. The Nth harmonic voltage and their commands or reference values (normally zero) are input to the harmonic voltage regulator 434. The harmonic voltage regulator 434 will regulate the harmonic voltage to follow their commands by outputting proper harmonic current commands Idnref.

Figs. 5, 6 and 7 illustrate example embodiments of a harmonic voltage regulator. Options of the harmonic regulator 434 are illustrated in Figs. 5, 6 and 7. Thereby, in all options, the error 540, 640, 740 is calculated and a closed-loop regulation of the harmonic voltage is made so that the nth harmonic voltage will follow the nth harmonic voltage command or reference. Thus, the regulators may be used to control harmonic voltage error to zero.

The harmonic voltage regulator 534 illustrated in Fig. 5 comprises a summation element 538 to which the filter winding voltage signal 536 and the reference winding voltage signal 592 is provided. The error signal 540 or the difference 540 is provided to a 90° phase-shifter 542 which shifts the signal by 90° and is supplied to a frame transformation module 544 which receives n times the electrical position $\Theta_e$ of the generator, wherein n corresponds to the harmonic to be damped. The frame transformation module 544 further receives the difference 540. The frame transformation module outputs the transformed difference to a first PI-regulator 546a and outputs the transformed difference to a second PI-regulator 546b which provide their outputs to another transformation module 548 which receives as input the negative of n times the electrical position of the generator and finally outputs the reference harmonic current command 593.

In Fig. 5, the phase of the regulation error is filtered 90° by a phase-shifter 542. This could be achieved by a filter or a derivative. The two components are converted to the nth rotating frame by a park transformation in module 544. A simple PI-controller 546a, 546b could be used as the regulators in the nth rotating frame. The outputs of the PI-regulators 546 are converted back to the nth rotating frame as the outputs of the harmonic voltage regulator.

Fig. 6 illustrates a harmonic voltage regulator 634, wherein the error 640 or difference is provided to a first trigonometric multiplicator 652 which multiplies the error by $2\sin(n\Theta_e)$ and provides the output to a PI-regulator 654 whose output is passed through a second trigonometric multiplicator 656 multiplying by $\sin(n\Theta_e)$. Furthermore, the difference 640 is passed through a third trigonometric multiplicator 658 which multiplies the error by $2\cos(n\Theta_e)$ and provides the output to a second regulator 660 which supplies its output to a fourth trigonometric multiplicator 662 which multiplies the input by $\cos(n\Theta_e)$. The outputs of the second and fourth trigonometric multiplicators 656, 662 are provided to a summation element 697, the sum represents the reference harmonic current command 693.

Fig. 7 illustrates a harmonic voltage regulator 734 wherein the difference 740 is provided to a resonant regulator 764 which is configured to output the reference harmonic current command 793 based on the difference 740, wherein the resonant regulator 764 is configured to regulate the harmonic (in this case the harmonic N). A typical transfer function of the resonant regulator may be as follows:

$$RR(s) = k_p + k_i \frac{4\pi f_1 \xi_1 S}{s^2 + 4\pi f_1 \xi_1 s + (2\pi f_1)^2}$$

Therein, $f_1$ is the resonance frequency and $\xi_1$ is the damping of the controller.

In particular, the examples illustrated in Fig. 6 and 7 are based on vector control principle. The regulation error 640, 740 passes sine channel and cosine channel and the output signals of the sine and cosine channels are summed using a summation element. Simple PI-controllers could be used as regulator.

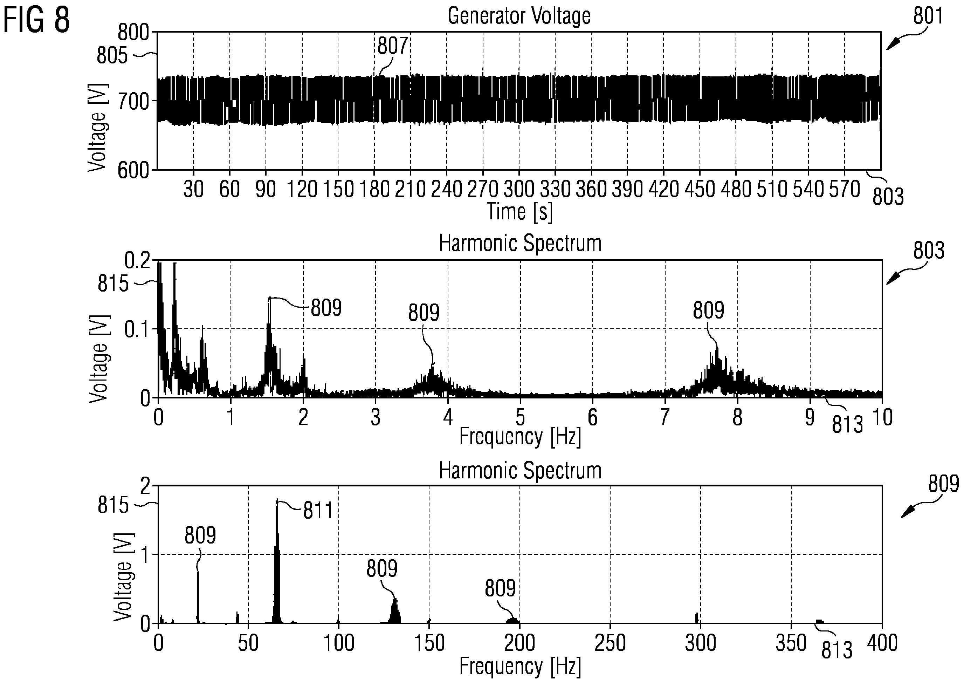

Fig. 8 illustrates graphs 801, 803 and 805, wherein the abscissa 803 in graph 801 denotes the time and the ordinate 805 denotes the generator voltage in a dq frame. The generator voltage 807 fluctuates with time having a mean of about 710 V according to a conventional generator operation.

In graphs 803 and 805, the abscissa 813 denotes the frequency and the ordinate 815 denotes the voltage. In the graphs 803, 805 in Fig. 8, the harmonic spectrum of the voltage fluctuations of the generator voltage 807 illustrated in graph 801 are illustrated. Ideally, the voltage in the dq frame should be a DC voltage, thus all harmonics should vanish. However, in the conventional system, the generator voltage deviates from a clean DC voltage including voltage peaks 809 and in particular including a peak 811 corresponding to the harmonics of six times the electrical frequency of the generator. According to embodiments of the present invention, the peaks 809, 811, in particular those corresponding to some harmonics of the generator electrical frequency may be reduced or even diminished or removed.

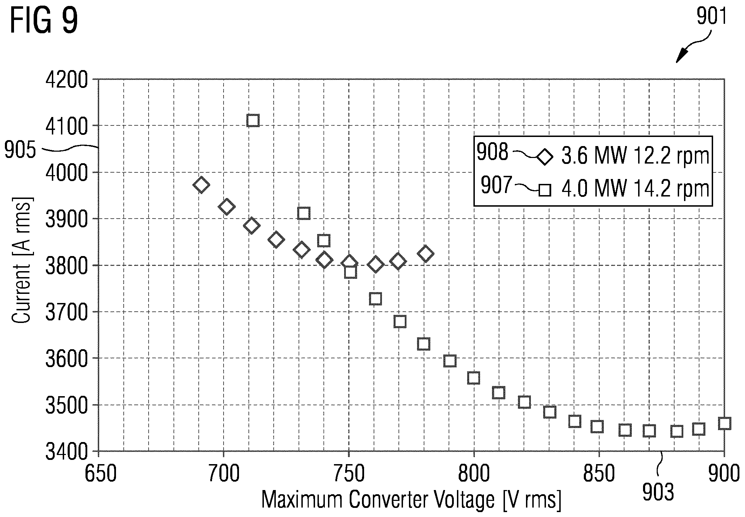

Fig. 9 illustrates a graph 901 in which an abscissa 903 denotes the maximum converter voltage and the ordinate 905 denotes the current. The samples 907 (for power of 4.0 MW at 14.2 rpm) and samples 908 (for power of 3.6 MW at 12.2 rpm) illustrates that the lower the maximum converter voltage, the higher is the required current. Due to the voltage peaks 809, 811 in a conventional converter or generator system, the average generator voltage reference is conventionally set to a constant value lower than the modulation limit voltage which may be at around 750 V. Due to the lower reference voltage value, a higher total generator/converter current results which may lower the efficiency because of the higher field weakening current for lower generator voltage.

Embodiments of the present invention may allow to damp peak voltages and may therefore allow to operate or set the average generator voltage reference closer to the modulation limit, i.e. closer to 750 V according to particular examples. Thereby, higher efficiency may be achieved when operating the generator system, in particular when driven by wind turbine blades.

**Claims**

1. Control arrangement (260, 360) for controlling plural stator currents (Ia, Ib, Ic) of plural stator windings (113, 115, 117) of an electrical machine (111, 211) of a generator system, wherein the plural windings are separately connectable to a converter (119, 219), the control arrangement comprising:
   a fundamental current controller (371), including:
   a positive-sequence current controller (365) configured for providing a first voltage command (375) in a dq+ frame, based on the plural stator currents (Ia, Ib, Ic);
   the control arrangement further comprising:

   at least one harmonic voltage controller (373a, 373b) related to a (nth or mth) harmonic (n, m) of an electrical frequency (f) of the electrical machine, wherein the harmonic voltage controller is configured to receive as inputs

   a winding voltage signal (391) related to voltages at the plural stator windings,
   a reference winding voltage signal (392) related to reference voltages at the plural stator windings and
   an electrical angle ($\Theta e$) of the electrical machine,

   wherein the harmonic voltage controller is configured to output an reference harmonic current command (393, Idnref) d-component (Idnref) of a reference harmonic current (Inref), based on the harmonic voltage controller inputs, wherein based on the reference harmonic current command (393, Idnref) a reference harmonic voltage command (Vdnh, Vqnh) is derivable;
   and
   a summation system (377) for adding separately for a respective d-component and a respective q-component, the first voltage command and the reference harmonic voltage command (Vdnh, Vqnh) to obtain a summed voltage command (398, Vd, Vq) based on which the converter (119, 219) is controllable.

2. Control arrangement according to claim 1, further comprising:
   at least one harmonic voltage calculation module (369a, 369b) configured to receive the reference harmonic current command (393a, 393b) and to output the reference harmonic voltage command (Vdnh, Vqnh) based on the reference harmonic current command.

3. Control arrangement according to claim 1 or 2, wherein the harmonic voltage controller (473) comprises:

   a filter (499) arranged to receive the winding voltage signal (491) and the electrical angle of the electrical machine and configured to output a filtered winding voltage signal (436) in which harmonics other than the harmonic of interest in the winding voltage signal are reduced;
   a harmonic voltage regulator (434) arranged to output the reference harmonic current command based on the filtered winding voltage signal and the reference winding voltage signal.

4. Control arrangement according to the preceding claim, wherein the harmonic voltage regulator comprises:

   a difference element (538, 638, 738) arranged for calculating a difference (540, 640, 740) between the filtered winding voltage signal (536) and the reference winding voltage signal (592);
   a regulator system configured to output the reference harmonic current command (593, 693, 793) based on the difference such that when a corresponding reference harmonic current is injected into the stator winding, damping of the harmonic is caused.

**5.** Control arrangement according to the preceding claim 4, wherein the regulator system (534) comprises:

a phase shifter (542) configured to output a 90 degree shifted difference;
a transformation module (544) configured to transform the difference and the shifted difference into a rotating frame corresponding to the harmonics (n,m);
a first PI-regulator (546a) configured to receive the transformed difference and to output a first regulator signal;
a second PI-regulator (546b) configured to receive the transformed difference and to output a second regulator signal;
another transformation module (548) configured to backtransform the first regulator signal and the second regulator signal into a rotating frame corresponding to the electrical frequency (f) of the electrical machine, in order to obtain the reference harmonic current command (593)

**6.** Control arrangement according to the claim 4, wherein the regulator system comprises:

a first trigonometric multiplicator (652) configured to output a first multiplied difference, being the difference multiplied by a first trigonometric multiplier depending on the harmonics (n, m);
a first regulator (654) configured to output a first regulator signal based on the first multiplied difference;
a second trigonometric multiplicator (656) configured to output a multiplied first regulator signal, being the first regulator signal multiplied by a second trigonometric multiplier depending on the harmonics (n, m);
a third trigonometric multiplicator (658) configured to output a third multiplied difference, being the difference multiplied by a third trigonometric multiplier depending on the harmonics (n, m);
a second regulator (660) configured to output a second regulator signal based on the third multiplied difference;
a fourth trigonometric multiplicator (662) configured to output a multiplied second regulator signal, being the second regulator signal multiplied by a fourth trigonometric multiplier depending on the harmonics (n, m); and
a summation element (697) configured to sum the multiplied first regulator signal and the multiplied second regulator signal and to output the sum as the reference harmonic current command (693).

**7.** Control arrangement according to the claim 4, wherein the regulator system comprises:
a resonant regulator (764) configured to output the reference harmonic current (793) command based on the difference, the resonant regulator being configured to regulate the harmonic (n,m).

**8.** Control arrangement according to one of the preceding claims when referred back to claim 2, wherein the harmonic voltage calculation module (369a, 369b) is configured to receive a q-component (Iqnref) of the reference harmonic current (Inref) being determined using a torque ripple controller, such as to reduce torque ripple in the electrical machine.

**9.** Control arrangement according to one of the preceding claims, further comprising:
a negative-sequence current controller (372) configured for providing a second voltage command (374) in the dq+ frame, based on the plural stator currents (Ia, Ib, Ic),
wherein the summation system (377) is adapted to add the first voltage command, the second voltage command, the reference harmonic voltage command (Vdnh, Vqnh) and a feedforward voltage signal (Vd1ff, Vq1ff), to obtain the summed voltage command (398, Vd, Vq).

**10.** Control arrangement according to one of the preceding claims,
wherein the positive-sequence current controller (365) comprises a frame transformation module (377) for transforming the plural stator currents (Ia, Ib, Ic), into a current signal (Id+, Iq+) in a dq+ frame based on an electrical angle ($\theta$e) of the electrical machine,
wherein the negative-sequence current controller (372) comprises a frame transformation module (376) for transforming the plural stator currents (Ia, Ib, Ic), into a current signal (Id-, Iq-) in a dq- frame based on a negative (-$\theta$e) of an electrical angle of the electrical machine.

**11.** Control arrangement according to one of the preceding claims,
wherein the positive-sequence current controller (365) comprises a filter (379a, 379b), being an adaptive filter having as an input the electrical frequency ($\omega$e) of the generator, for generating a filtered dq+ current signal (Id1+, Iq1+), in which AC-components, in particular AC-components corresponding to harmonics a multiple of electrical frequency ($\omega$e), are reduced in amplitude, and/or
wherein the negative-sequence current controller (372) comprises another filter (378a, 378b), being an adaptive filter having as an input the electrical frequency ($\omega$e) of the generator, for generating a filtered dq- current signal (Id1-, Iq1-), in which AC-components corresponding at multiple of electrical frequency ($\omega$e), are reduced in amplitude, wherein, a filter characteristics of the filter of the negative-sequence current controller and/or the other filter of the positive-sequence current controller is adaptable according to the electrical frequency ($\omega$e) of the generator.

12. Control arrangement according to the preceding claims, further comprising a voltage feedforward module (387) for generating the feedforward voltage signal (Vd1ff, Vq1ff) based on the positive-sequence current reference signal (Iq1+ref, Id1+ref) and the negative-sequence current reference signal (Iq1-ref, Id1-ref,) and based on electrical frequency ($\omega$e) of the electrical machine.

13. Converter controller (250) for controlling a converter of an energy production system, the converter controller comprising:

   a control arrangement (260) according to one of the preceding claims;
   a transformation module (261) for transforming the summed voltage command from rotating dq+ frame to a stationary three phase frame or two phase frame command;
   a modulator (265) to modulate the three phase frame command according to a DC-voltage at a DC-link of the converter.

14. Generator System (270) comprising:

   a generator (211) having a rotor and at least one set of plural stator windings;
   at least one converter (219), wherein the plural stator windings of each of the at least one set of stator windings are connected to a corresponding converter of the at least one converter;
   a converter controller (250) according to the preceding claim for each converter, connected to the corresponding converter,

   wherein the generator is in particular a variable frequency generator,
   wherein the converter is in particular a AC-DC-AC converter.

15. Wind turbine (100), comprising:

   a rotor shaft (107, 109) having plural rotor blades (105) connected thereon; and
   a generator system (270) according to the preceding claim, wherein the rotor of the generator system is mechanically coupled with the rotor shaft.

**Patentansprüche**

1. Steuerungsanordnung (260, 360) zur Steuerung mehrerer Statorströme (Ia, Ib, Ic) mehrerer Statorwicklungen (113, 115, 117) einer elektrischen Maschine (111, 211) eines Generatorsystems,
   wobei die mehreren Wicklungen an einen Wandler (119, 219) getrennt anschließbar sind, wobei die Steuerungsanordnung umfasst:
   eine Grundschwingungsstromsteuerung (371), umfassend:

   eine Mitkomponentenstromsteuerung (365), die zur Bereitstellung einer ersten Steuerspannung (375) in einem "dq+"-Bezugssystem basierend auf den mehreren Statorströmen (Ia, Ib, Ic) eingerichtet ist;
   wobei die Steuerungsanordnung weiterhin umfasst:

      wenigstens eine Oberschwingungsspannungssteuerung (373a, 373b), die mit einer (n. oder m.) Oberschwingung (n, m) einer elektrischen Frequenz (f) der elektrischen Maschine in Beziehung steht, wobei die Oberschwingungsspannungssteuerung so eingerichtet ist, dass sie als Eingaben
      ein Wicklungsspannungssignal (391), das mit Spannungen an den mehreren Statorwicklungen in Beziehung steht,
      ein Referenz-Wicklungsspannungssignal (392), das mit Referenzspannungen an den mehreren Statorwicklungen in Beziehung steht, und
      einen elektrischen Winkel ($\Theta$e) der elektrischen Maschine empfängt, wobei die Oberschwingungsspannungssteuerung so eingerichtet ist, dass sie einen Referenz-Oberschwingungssteuerstrom (393, Idnref), eine d-Komponente (Idnref) eines Referenz-Oberschwingungsstroms (Inref) basierend auf den Eingangssignalen der Oberschwingungsspannungssteuerung ausgibt, wobei basierend auf dem Referenz-Oberschwingungssteuerstrom (393, Idnref) eine Referenz-Oberschwingungssteuerspannung (Vdnh, Vqnh) ableitbar ist;
und
ein Summiersystem (377) zum getrennten Addieren für eine jeweilige d-Komponente und eine jeweilige q-Komponente der ersten Steuerspannung und der Bezugs-Oberschwingungssteuerspannung (Vdnh, Vqnh), wodurch eine Summensteuerspannung (398, Vd, Vq) erhalten wird, auf deren Grundlage der Wandler (119, 219) steuerbar ist.

2.  Steuerungsanordnung nach Anspruch 1, weiterhin umfassend:
wenigstens ein Modul (369a, 369b) zur Berechnung der Oberschwingungsspannung, das so eingerichtet ist, dass es den Referenz-Oberschwingungssteuerstrom (393a, 393b) empfängt und die Referenz-Oberschwingungssteuerspannung (Vdnh, Vqnh) basierend auf dem Referenz-Oberschwingungssteuerstrom ausgibt.

3.  Steuerungsanordnung nach Anspruch 1 oder 2, wobei die Oberschwingungsspannungssteuerung (473) umfasst:

ein Filter (499), das dazu geeignet ist, das Wicklungsspannungssignal (491) und den elektrischen Winkel der elektrischen Maschine zu empfangen, und so eingerichtet ist, dass es ein gefiltertes Wicklungsspannungssignal (436) ausgibt, in dem Oberschwingungen im Wicklungsspannungssignal, die von der interessierenden Oberschwingung verschieden sind, reduziert sind;
einen Oberschwingungsspannungsregler (434), der dazu geeignet ist, den Referenz-Oberschwingungssteuerstrom basierend auf dem gefilterten Wicklungsspannungssignal und dem Referenz-Wicklungsspannungssignal auszugeben.

4.  Steuerungsanordnung nach dem vorhergehenden Anspruch, wobei der Oberschwingungsspannungsregler umfasst:

ein Differenzelement (538, 638, 738), das dazu geeignet ist, eine Differenz (540, 640, 740) zwischen dem gefilterten Wicklungsspannungssignal (536) und dem Referenz-Wicklungsspannungssignal (592) zu berechnen;
ein Reglersystem, das so eingerichtet ist, dass es den Referenz-Oberschwingungssteuerstrom (593, 693, 793) basierend auf der Differenz so ausgibt, dass, wenn ein entsprechender Referenz-Oberschwingungsstrom in die Statorwicklung eingespeist wird, eine Dämpfung der Oberschwingung bewirkt wird.

5.  Steuerungsanordnung nach dem vorhergehenden Anspruch 4, wobei das Reglersystem (534) umfasst:

einen Phasenschieber (542), der so eingerichtet ist, dass er eine um 90 Grad verschobene Differenz ausgibt;
ein Transformationsmodul (544), das so eingerichtet ist, dass es die Differenz und die verschobene Differenz in ein rotierendes, den Oberschwingungen (n, m) entsprechendes Bezugssystem transformiert;
einen ersten PI-Regler (546a), der so eingerichtet ist, dass er die transformierte Differenz empfängt und ein erstes Reglersignal ausgibt;
einen zweiten PI-Regler (546b), der so eingerichtet ist, dass er die transformierte Differenz empfängt und ein zweites Reglersignal ausgibt;
ein weiteres Transformationsmodul (548), das so eingerichtet ist, dass es das erste Reglersignal und das zweite Reglersignal in ein rotierendes Bezugssystem, das der elektrischen Frequenz (f) der elektrischen Maschine entspricht, rücktransformiert, um den Referenz-Oberschwingungssteuerstrom (593) zu erhalten.

6.  Steuerungsanordnung nach Anspruch 4, wobei das Reglersystem umfasst:

einen ersten trigonometrischen Multiplikator (652), der so eingerichtet ist, dass er eine erste multiplizierte Differenz ausgibt, bei der es sich um die Differenz handelt, die mit einem ersten, von den Oberschwingungen (n, m) abhängigen trigonometrischen Multiplikator multipliziert wird;
einen ersten Regler (654), der so eingerichtet ist, dass er ein erstes Reglersignal basierend auf der ersten multiplizierten Differenz ausgibt;
einen zweiten trigonometrischen Multiplikator (656), der so eingerichtet ist, dass er ein multipliziertes erstes Reglersignal ausgibt, bei dem es sich um das erste Reglersignal handelt, das mit einem zweiten, von den Oberschwingungen (n, m) abhängigen trigonometrischen Multiplikator multipliziert wird;
einen dritten trigonometrischen Multiplikator (658), der so eingerichtet ist, dass er eine dritte multiplizierte Differenz ausgibt, bei der es sich um die Differenz handelt, die mit einem dritten, von den Oberschwingungen (n, m) abhängigen trigonometrischen Multiplikator multipliziert wird;

einen zweiten Regler (660), der so eingerichtet ist, dass er ein zweites Reglersignal basierend auf der dritten multiplizierten Differenz ausgibt;

einen vierten trigonometrischen Multiplikator (662), der so eingerichtet ist, dass er ein multipliziertes zweites Reglersignal ausgibt, bei dem es sich um das zweite Reglersignal handelt, das mit einem vierten, von den Oberschwingungen (n, m) abhängigen trigonometrischen Multiplikator multipliziert wird; und

ein Summierelement (697), das so eingerichtet ist, dass es das multiplizierte erste Reglersignal und das multiplizierte zweite Reglersignal summiert und die Summe als Referenz-Oberschwingungssteuerstrom (693) ausgibt.

7. Steuerungsanordnung nach Anspruch 4, wobei das Reglersystem umfasst:

einen Resonanzregler (764), der so eingerichtet ist, dass er den Referenz-Oberschwingungssteuerstrom (793) basierend auf der Differenz ausgibt, wobei der Resonanzregler so eingerichtet ist, dass er die Oberschwingung (n, m) regelt.

8. Steuerungsanordnung nach einem der vorhergehenden Ansprüche, wenn auf Anspruch 2 rückbezogen, wobei das Modul zur Berechnung der Oberschwingungsspannung (369a, 369b) so eingerichtet ist, dass es eine q-Komponente (Iqnref) des bestimmten Referenz-Oberschwingungsstroms (Inref) unter Verwendung einer Drehmomentwelligkeitssteuerung empfängt, sodass die Drehmomentwelligkeit in der elektrischen Maschine reduziert wird.

9. Steuerungsanordnung nach einem der vorhergehenden Ansprüche, weiterhin umfassend:

eine Gegenkomponentenstromsteuerung (372), die zur Bereitstellung einer zweiten Steuerspannung (374) im "dq+"-Bezugssystem basierend auf mehreren Statorströmen (Ia, Ib, Ic) eingerichtet ist,

wobei das Summiersystem (377) so eingerichtet ist, dass es die erste Steuerspannung, die zweite Steuerspannung, die Referenz-Oberschwingungssteuerspannung (Vdnh, Vqnh) und ein Feedforward-Spannungssignal (Vd1ff, Vq1ff) addiert, wodurch die Summensteuerspannung (398, Vd, Vq) erhalten wird.

10. Steuerungsanordnung nach einem der vorhergehenden Ansprüche, wobei die Mitkomponentenstromsteuerung (365) ein Bezugssystem-Transformationsmodul (377) zum Transformieren der mehreren Statorströme (Ia, Ib, Ic) in ein Stromsignal (Id+, Iq+) in einem "dq+"-Bezugssystem basierend auf einem elektrischen Winkel (θe) der elektrischen Maschine umfasst, während die Gegenkomponentenstromsteuerung (372) ein Bezugssystem-Transformationsmodul (376) zum Transformieren der mehreren Statorströme (Ia, Ib, Ic) in ein Stromsignal (Id-, Iq-) in einem "dq-"-Bezugssystem basierend auf einem Minuswert (-θe) eines elektrischen Winkels der elektrischen Maschine umfasst.

11. Steuerungsanordnung nach einem der vorhergehenden Ansprüche, wobei die Mitkomponentenstromsteuerung (365) ein Filter (379a, 379b) umfasst, bei dem es sich um ein adaptives Filter mit der elektrischen Frequenz (ωe) des Generators als Eingangsgröße handelt, um ein gefiltertes "dq+"-Stromsignal (Id1+, Iq1+) zu erzeugen, in dem die Amplitude von Wechselstromkomponenten, insbesondere Wechselstromkomponenten, die Oberschwingungen eines Mehrfachen der elektrischen Frequenz (ωe) entsprechen, reduziert wird, und/oder wobei die Gegenkomponentenstromsteuerung (372) ein anderes Filter (378a, 378b) umfasst, bei dem es sich um ein adaptives Filter mit der elektrischen Frequenz (ωe) des Generators als Eingangsgröße handelt, um ein gefiltertes "dq-"-Stromsignal (Id1-, Iq1-) zu erhalten, in dem die Amplitude von Wechselstromkomponenten, die einem Mehrfachen der elektrischen Frequenz (ωe) entsprechen, reduziert wird,

wobei die Filtermerkmale des Filters der Gegenkomponentenstromsteuerung und/oder des anderen Filters der Mitkomponentenstromsteuerung in Abhängigkeit von der elektrischen Frequenz (ωe) des Generators anpassbar sind.

12. Steuerungsanordnung nach den vorhergehenden Ansprüchen, weiterhin umfassend ein Spannungs-Feedforward-Modul (387) zur Erzeugung des Feedforward-Spannungssignals (Vd1ff, Vq1ff) basierend auf dem Mitkomponentenstrom-Referenzsignal (Iq1+ref, Id1+ref) und dem Gegenkomponentenstrom-Referenzsignal (Iq1-ref, Id1-ref) und basierend auf der elektrischen Frequenz (ωe) der elektrischen Maschine.

13. Wandlersteuerung (250) zum Steuern eines Wandlers eines Energieerzeugungssystems, wobei die Wandlersteuerung umfasst:

eine Steuerungsanordnung (260) nach einem der vorhergehenden Ansprüche;

ein Transformationsmodul (261) zum Transformieren der Summensteuerspannung aus dem rotierenden "dq+"-Bezugssystem in eine Steuerspannung für das feststehende Drei- oder Zweiphasenbezugssystem;

einen Modulator (265) zum Modulieren der Steuerspannung für das Dreiphasenbezugssystem gemäß einer Gleichspannung an einem Gleichspannungs-Zwischenkreis des Wandlers.

14. Generatorsystem (270), umfassend:

einen Generator (211) mit einem Rotor und mindestens einem Satz von mehreren Statorwicklungen;

wenigstens einen Wandler (219), wobei die mehreren Statorwicklungen eines jeden des wenigstens einen Satzes von Statorwicklungen an einen dazugehörigen Wandler des wenigstens einen Wandlers angeschlossen sind;

eine Wandlersteuerung (250) nach dem vorhergehenden Anspruch für jeden Wandler, die an den dazugehörigen Wandler angeschlossen ist,

wobei der Generator insbesondere ein Generator variabler Frequenz ist,

wobei der Wandler insbesondere ein Wechselstrom-Gleichstrom-Wechselstrom-Wandler ist.

15. Windturbine (100), umfassend:

eine Rotorwelle (107, 109) mit mehreren damit verbundenen Rotorblättern (105) und

ein Generatorsystem (270) nach dem vorhergehenden Anspruch, wobei der Rotor des Generatorsystems mit der Rotorwelle mechanisch gekoppelt ist.

## Revendications

1. Agencement de commande (260, 360) pour commander plusieurs courants de stator (Ia, Ib, Ic) de plusieurs enroulements de stator (113, 115, 117) d'une machine électrique (111, 211) d'un système de générateur, dans lequel les plusieurs enroulements peuvent être connectés de façon séparée à un convertisseur (119, 219), l'agencement de commande comprenant :

un contrôleur de courant fondamental (371), incluant :

un contrôleur de courant de séquence positive (365) qui est configuré pour fournir une première commande de tension (375), dans un référentiel dq+, sur la base des plusieurs courants de stator (Ia, Ib, Ic) ;

l'agencement de commande comprenant en outre :

au moins un contrôleur de tension d'harmonique (373a, 373b) en rapport avec un (n-ième ou m-ième) harmonique (n, m) d'une fréquence électrique (f) de la machine électrique, dans lequel le contrôleur de tension d'harmonique est configuré de manière à ce qu'il reçoive en tant qu'entrées :

un signal de tension d'enroulement (391) en rapport avec des tensions au niveau des plusieurs enroulements de stator ;

un signal de tension d'enroulement de référence (392) en rapport avec des tensions de référence au niveau des plusieurs enroulements de stator ; et

un angle électrique ($\theta$e) de la machine électrique ; dans lequel :

le contrôleur de tension d'harmonique est configuré de manière à ce qu'il émette en sortie une commande de courant d'harmonique de référence (393, Idnref), soit une composante d (Idnref) d'un courant d'harmonique de référence (Inref), sur la base des entrées de contrôleur de tension d'harmonique, dans lequel, sur la base de la commande de courant d'harmonique de référence (393, Idnref), une commande de tension d'harmonique de référence (Vdnh, Vqnh) peut être dérivée ; et

un système de sommation (377) pour additionner de façon séparée, pour une composante d respective et une composante q respective, la première commande de tension et la commande de tension d'harmonique de référence (Vdnh, Vqnh) afin d'obtenir une commande de tension sommée (398, Vd, Vq) sur la base de laquelle le convertisseur (119, 219) peut être commandé.

2. Agencement de commande selon la revendication 1, comprenant en outre :

au moins un module de calcul de tension d'harmonique (369a, 369b) qui est configuré de manière à ce qu'il reçoive la commande de courant d'harmonique de référence (393a, 393b) et de manière à ce qu'il émette en sortie la commande de tension d'harmonique de référence (Vdnh, Vqnh) sur la base de la commande de courant d'harmonique de référence.

3. Agencement de commande selon la revendication 1 ou 2, dans lequel le contrôleur de tension d'harmonique (473) comprend :

un filtre (499) qui est agencé de manière à ce qu'il reçoive le signal de tension d'enroulement (491) et l'angle électrique de la machine électrique et qui est configuré de manière à ce qu'il émette en sortie un signal de tension d'enroulement filtré (436) dans lequel des harmoniques autres que l'harmonique d'intérêt dans le signal de tension d'enroulement sont réduits ; et
un régulateur de tension d'harmonique (434) qui est agencé de manière à ce qu'il émette en sortie la commande de courant d'harmonique de référence sur la base du signal de tension d'enroulement filtré et du signal de tension d'enroulement de référence.

4. Agencement de commande selon la revendication précédente, dans lequel le régulateur de tension d'harmonique comprend :

un élément de différence (538, 638, 738) qui est agencé pour calculer une différence (540, 640, 740) entre le signal de tension d'enroulement filtré (536) et le signal de tension d'enroulement de référence (592) ;
un système de régulateur qui est configuré de manière à ce qu'il émette en sortie la commande de courant d'harmonique de référence (593, 693, 793) sur la base de la différence de telle sorte que, lorsqu'un courant d'harmonique de référence correspondant est injecté à l'intérieur de l'enroulement de stator, un amortissement de l'harmonique soit généré.

5. Agencement de commande selon la revendication précédente 4, dans lequel le système de régulateur (534) comprend :

un déphaseur (542) qui est configuré de manière à ce qu'il émette en sortie une différence déphasée de 90 degrés ;
un module de transformation (544) qui est configuré de manière à ce qu'il transforme la différence et la différence déphasée selon un référentiel tournant qui correspond aux harmoniques (n, m) ;
un premier régulateur PI (546a) qui est configuré de manière à ce qu'il reçoive la différence transformée et de manière à ce qu'il émette en sortie un premier signal de régulateur ;
un second régulateur PI (546b) qui est configuré de manière à ce qu'il reçoive la différence transformée et de manière à ce qu'il émette en sortie un second signal de régulateur ; et
un autre module de transformation (548) qui est configuré de manière à ce qu'il rétro-transforme le premier signal de régulateur et le second signal de régulateur selon un référentiel tournant qui correspond à la fréquence électrique (f) de la machine électrique, afin d'obtenir la commande de courant d'harmonique de référence (593).

6. Agencement de commande selon la revendication 4, dans lequel le système de régulateur comprend :

un premier multiplicateur trigonométrique (652) qui est configuré de manière à ce qu'il émette en sortie une première différence multipliée, qui est la différence multipliée par un premier multiplieur trigonométrique qui est fonction des harmoniques (n, m) ;
un premier régulateur (654) qui est configuré de manière à ce qu'il émette en sortie un premier signal de régulateur sur la base de la première différence multipliée ;
un deuxième multiplicateur trigonométrique (656) qui est configuré de manière à ce qu'il émette en sortie un premier signal de régulateur multiplié, qui est le premier signal de régulateur multiplié par un deuxième multiplieur trigonométrique qui est fonction des harmoniques (n, m) ;
un troisième multiplicateur trigonométrique (658) qui est configuré de manière à ce qu'il émette en sortie une troisième différence multipliée, qui est la différence multipliée par un troisième multiplieur trigonométrique qui est fonction des harmoniques (n, m) ;
un second régulateur (660) qui est configuré de manière à ce qu'il émette en sortie un second signal de régulateur sur la base de la troisième différence multipliée ;
un quatrième multiplicateur trigonométrique (662) qui est configuré de manière à ce qu'il émette en sortie un second signal de régulateur multiplié, qui est le second signal de régulateur multiplié par un quatrième multiplieur trigonométrique qui est fonction des harmoniques (n, m) ; et
un élément de sommation (697) qui est configuré de manière à ce qu'il somme le premier signal de régulateur multiplié et le second signal de régulateur multiplié et de manière à ce qu'il émette en sortie la somme en tant que commande de courant d'harmonique de référence (693).

7. Agencement de commande selon la revendication 4, dans lequel le système de régulateur comprend :
un régulateur résonnant (764) qui est configuré de manière à ce qu'il émette en sortie la commande de courant d'harmonique de référence (793) sur la base de la différence, le régulateur résonnant étant configuré de manière à ce qu'il régule l'harmonique (n, m).

8. Agencement de commande selon l'une des revendications précédentes lorsqu'elle dépend de la revendication 2, dans lequel le module de calcul de tension d'harmonique (369a, 369b) est configuré de manière à ce qu'il reçoive une composante q (Iqnref) du courant d'harmonique de référence (Inref) qui est déterminée en utilisant un contrôleur d'ondulation de couple, de manière à réduire l'ondulation de couple dans la machine électrique.

9. Agencement de commande selon l'une des revendications précédentes, comprenant en outre :
un contrôleur de courant de séquence négative (372) qui est configuré pour fournir une seconde commande de tension (374), dans le référentiel dq+, sur la base des plusieurs courants de stator (Ia, Ib, Ic) ; dans lequel :
le système de sommation (377) est adapté de manière à ce qu'il additionne la première commande de tension, la seconde commande de tension, la commande de tension d'harmonique de référence (Vdnh, Vqnh) et un signal de tension prédictive (Vd1ff, Vq1ff), afin d'obtenir la commande de tension sommée (398, Vd, Vq).

10. Agencement de commande selon l'une des revendications précédentes, dans lequel le contrôleur de courant de séquence positive (365) comprend un module de transformation de référentiel (377) pour transformer les plusieurs courants de stator (Ia, Ib, Ic) selon un signal de courant (Id+, Iq+) dans un référentiel dq+ sur la base d'un angle électrique ($\theta$e) de la machine électrique, dans lequel le contrôleur de courant de séquence négative (372) comprend un module de transformation de référentiel (376) pour transformer les plusieurs courants de stator (Ia, Ib, Ic) selon un signal de courant (Id-, Iq-) dans un référentiel dq- sur la base d'une valeur négative (-$\theta$e) d'un angle électrique de la machine électrique.

11. Agencement de commande selon l'une des revendications précédentes, dans lequel le contrôleur de courant de séquence positive (365) comprend un filtre (379a, 379b) qui est un filtre adaptatif qui comporte, en tant qu'entrée, la fréquence électrique ($\omega$e) du générateur, pour générer un signal de courant dq+ filtré (Id1+, Iq1+), dans lequel des composantes de courant alternatif/AC, en particulier des composantes de courant alternatif/AC qui correspondent à un multiple de la fréquence électrique ($\omega$e), sont réduites en termes d'amplitude, et/ou dans lequel le contrôleur de courant de séquence négative (372) comprend un autre filtre (378a, 378b) qui est un filtre adaptatif qui comporte, en tant qu'entrée, la fréquence électrique ($\omega$e) du générateur, pour générer un signal de courant dq- filtré (Id1-, Iq1-), dans lequel des composantes de courant alternatif/AC qui correspondent à un multiple de la fréquence électrique ($\omega$e) sont réduites en termes d'amplitude, dans lequel une caractéristique de filtre du filtre du contrôleur de courant de séquence négative et/ou de l'autre filtre du contrôleur de courant de séquence positive peut être adaptée en fonction de la fréquence électrique ($\omega$e) du générateur.

12. Agencement de commande selon les revendications précédentes, comprenant en outre un module de prédiction de tension (387) pour générer le signal de tension prédictive (Vd1ff, Vq1ff) sur la base du signal de référence de courant de séquence positive (Iq1+ref, Id1+ref) et du signal de référence de courant de séquence négative (Iq1-ref, Id1-ref) et sur la base de la fréquence électrique ($\omega$e) de la machine électrique.

13. Contrôleur de convertisseur (250) pour commander un convertisseur d'un système de production d'énergie, le contrôleur de convertisseur comprenant :

un agencement de commande (260) selon l'une des revendications précédentes ;
un module de transformation (261) pour transformer la commande de tension sommée depuis un référentiel dq+ tournant selon une commande de référentiel triphasé ou biphasé stationnaire ; et
un modulateur (265) pour moduler la commande de référentiel triphasé conformément à une tension continue/DC au niveau d'une liaison courant continu/DC du convertisseur.

14. Système de générateur (270) comprenant :

un générateur (211) qui comporte un rotor et au moins un jeu de plusieurs enroulements de stator ;
au moins un convertisseur (219), dans lequel les plusieurs enroulements de stator de chaque jeu de l'au moins un jeu d'enroulements de stator sont connectés à un convertisseur correspondant de l'au moins un convertisseur ;

un contrôleur de convertisseur (250) selon la revendication précédente pour chaque convertisseur, lequel contrôleur de convertisseur est connecté au convertisseur correspondant ; dans lequel :

le générateur est en particulier un générateur de fréquence variable ; dans lequel :

le convertisseur est en particulier un convertisseur courant alternatif-courant continu-courant alternatif/AC-DC-AC.

15. Éolienne (100), comprenant :

un arbre de rotor (107, 109) qui comporte plusieurs pales de rotor (105) qui lui sont connectées ; et

un système de générateur (270) selon la revendication précédente, dans laquelle le rotor du système de générateur est couplé mécaniquement à l'arbre de rotor.

FIG 1

FIG 2

270

Gen
211
217
215
213
219
235
265
Udc
263 Va
Vb
Vc
263
θe
261
259 Vd
Vq
260
257 { Ia Ib Ic θe ωe
253 I+dref
I+qref
I−dref
I−qref
255
250
251
237 { Pref/Tref
Ugen
Udc
ωe
P/T

FIG 3

## FIG 4

473

θ_e    V_RMS_Ref_N

V_RMS →  499  → V_RMSN → 436 → 434 → I_dnref

491        492              493

## FIG 5

534

V_RMS_Ref_N

nθ_e        -nθ_e

V_RMS → 536 + 538 − → V_N_Error 540 → 542 → 544 → 546a → 548 → I_dnref

546b        593

## FIG 6

634

V_RMS_Ref_N

V_RMSN → 638 + − → V_N_Error 640 → 2sin(nθ_e) 652 → 654 → sin(nθ_e) 656 → 697 → I_dnref

2cos(nθ_e) 658 → 660 → cos(nθ_e) 662    693

## FIG 7

734

V_RMS_Ref_N

V_RMS → 738 + − → V_N_Error 740 → 764 → I_dnref 793

FIG 8

Generator Voltage

Harmonic Spectrum

Harmonic Spectrum

EP 3 264 593 B1

FIG 9

EP 3 264 593 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2043255 A2
- EP 2672624 A